# EUROPÄISCHE PATENTSCHRIFT

(11) **EP 2 283 248 B1**
(45) Veröffentlichungstag und Bekanntmachung des Hinweises auf die Patenterteilung: **18.06.2014**
(21) Anmeldenummer: 09757166.5
(22) Anmeldetag: 15.05.2009
(51) Int. Cl.: F16F 15/134

(54) **ZWEIMASSENSCHWUNGRAD MIT RADIAL ANGEORDNETEM DRAHTKISSENKÖRPER**
DUAL-MASS FLYWHEEL HAVING RADIALLY ARRANGED WIRE CUSHION BODIES
VOLANT D'INERTIE À DEUX MASSES AVEC CORPS DE COUSSIN EN FIL MÉTALLIQUE DISPOSÉ RADIALEMENT

(30) Priorität: 06.06.2008 DE 102008027203
(43) Veröffentlichungstag der Anmeldung: 16.02.2011
(73) Patentinhaber: Bayerische Motoren Werke Aktiengesellschaft, 80809 München (DE)
(72) Erfinder: LETZER, Michael, 83512 Wasserburg (DE); KRÖGER, Werner, 85764 Oberschleissheim (DE); GORSKI, Ekkehard, 82418 Murnau (DE)
(86) Internationale Anmeldenummer: PCT/EP2009/003469
(87) Internationale Veröffentlichungsnummer: WO 2009/146783

(56) Entgegenhaltungen:
- CH-A- 392 279
- DE-A1- 19 910 919
- DE-A1-102007 003 047
- DE-A1-102008 011 725
- FR-A- 1 495 611

## Beschreibung

Die vorliegende Erfindung betrifft ein Zweimassenschwungrad mit einem ersten Massenkörper sowie einem zweiten Massenkörper, die die über eine zwischen dem ersten und zweiten Massenkörper angeordnete Dämpfungseinrichtung gegeneinander verdrehbar sind und die Dämpfungseinrichtung mindestens eine bogenförmig verlaufende Schraubendruckfeder aufweist, die über am ersten und zweiten Massenkörper ausgebildete Anlageflächen Federkraft in die Massenkörper einleitet und die Schraubendruckfeder mittels einer von einem Massenkörper gebildeten Wandung radial geführt ist und zwischen der Wandung und der Schraubendruckfeder mindestens ein die Reibung verminderndes Gleitbauteil vorgesehen ist.

Ein gattungsgemäßes Zweimassenschwungrad kann im Antriebstrang eines Kraftfahrzeugs eingesetzt werden. Der Antriebstrang besteht aus Motor, Getriebe und Fahrzeug, so dass sich die Schwingungsanregung vom Motor auch auf die übrigen Komponenten des Antriebs auswirkt. Um nun das Schwingungsverhalten und damit auch das Geräuschverhalten des Antriebstrangs zu verbessern, werden Zweimassenschwungräder eingesetzt, die eine Primärmasse oder einen ersten Massenkörper aufweisen, der beispielsweise starr mit der Kurbelwelle des Motors verbunden sein kann und eine Sekundärmasse oder zweiten Massenkörper, der relativ zum ersten Massenkörper verdrehbar ist. Die ersten und zweiten Massenkörper werden über eine Dämpfungseinrichtung drehelastisch miteinander verbunden.

Ein gattungsgemäßes Zweimassenschwungrad ist beispielsweise anhand der DE 10 2007 003 047 A1 bekannt geworden. Die Massenkörper dieses bekannten Zweimassenschwungrads stützen sich aneinander über Schraubendruckfedern ab, und zwar über an den Massenkörpern vorgesehene Anlageflächen.

Dieses bekannte Zweimassenschwungrad ist dabei so ausgebildet, dass den Aufnahmeraum für die Schraubendruckfedern ausbildende Blechteile zur Gewichtsersparnis mit dünnen Wandstärken ausgebildet sind und sich die Schraubendruckfedern über Gleitschuhe gegen die Blechteile abstützen. Die Einleitung von Druckkräften in die Blechteile erfolgt dabei über flanschartig ausgebildete Beaufschlagungsbauteile. Über die Gleitschuhe zwischen den Schraubendruckfedern und den Blechteilen soll erreicht werden, dass sich die Federenden nicht durch die Blechteile hindurch arbeiten.

Es bedeutet dies mit anderen Worten, dass in der Form der Gleitschuhe Zusatzbauteile vorhanden sind, die dafür sorgen sollen, dass die Reibung zwischen der Schraubendruckfeder und einer die Schraubendruckfeder führenden Wandung verringert wird. Bei den Schraubendruckfedern handelt es sich nämlich um massebehaftete Bauteile, die bei hoher Drehwinkelgeschwindigkeit des Zweimassenschwungrads mit hoher Fliehkraft gegen die Wandung gedrückt werden.

Aufgrund dieser hohen Fliehkraft werden in dem die Schraubendruckfeder führenden Kanal vorhandene Schmierstoffe aus dem Kontaktbereich zwischen der Schraubendruckfeder und der Wandung heraus gedrückt, was dazu führt, dass die Reibung zwischen der Wandung und der Schraubendruckfeder soweit ansteigt, dass sich die Schraubendruckfeder wie ein Starrkörperelement verhält und somit eine gewünschte akustische Entkopplung zwischen dem Antriebsmotor und dem Triebstrang des Fahrzeugs nicht mehr gegeben ist.

Die bei dem vorstehend beschriebenen bekannten Zweimassenschwungrad vorhandenen Gleitschuhe sind aus einem Kunststoffwerkstoff gefertigt, der aufgrund der Relativbewegung zwischen der Schraubendruckfeder und der Wandung gleichsam zerrieben wird und somit seine die Reibung vermindernde Funktion nicht mehr ausüben kann. Auch führt die bei dem bekannten Zweimassenschwungrad vorhandene Vielzahl an Gleitschuhen zu einer beträchtlichen und unerwünschten Kostensteigerung des Zweimassenschwungrads.

Ausgehend hiervon liegt der vorliegenden Erfindung nunmehr die Aufgabe zu Grunde, das gattungsgemäße Zweimassenschwungrad derart weiterzubilden, dass die die Reibung vermindernde Funktion zwischen der Schraubendruckfeder und der Wandung auch bei längerer Betriebszeit aufrechterhalten bleibt und damit die akustische Entkopplung zwischen Motor und Triebstrang erhalten bleibt.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung sieht ein Zweimassenschwungrad vor mit einem ersten Massenkörper sowie einem zweiten Massenkörper, die über eine zwischen dem ersten und zweiten Massenkörper angeordnete Dämpfungseinrichtung gegeneinander verdrehbar sind und die Dämpfungseinrichtung mindestens eine bogenförmig verlaufende Schraubendruckfeder aufweist, die über am ersten und zweiten Massenkörper ausgebildete Anlageflächen Federkraft in die Massenkörper einleitet und die Schraubendruckfeder mittels einer von einem Massenkörper gebildeten Wandung radial geführt ist und zwischen der Wandung und der Schraubendruckfeder mindestens ein die Reibung verminderndes Gleitbauteil vorgesehen ist, wobei als Gleitbauteil ein Drahtkissenkörper vorgesehen ist.

Damit ist eine Konfiguration geschaffen, die wesentlich belastbarer ist als die aus einem Kunststoffwerkstoff gebildeten Gleitschuhe des vorstehend beschriebenen bekannten Zweimassenschwungrads. Die unter Fliehkraft stehende Schraubendruckfeder liegt an der Wandung nicht mehr direkt an, sondern zumindest entlang der Längsrichtung der Schraubendruckfeder abschnittsweise unter Zwischenschaltung eines Drahtkissenkörpers.

Der Drahtkissenkörper weist eine Federwirkung auf, die je nachdem, in welcher Richtung er dichter oder weniger dicht gepackt ist, unterschiedlich gestaltet sein kann. So kann der Drahtkissenkörper in Längsrichtung der Schraubendruckfeder und/oder in radialer Richtung elastisch ausgebildet sein. Der Drahtkissenkörper weist Hohlräume auf, in denen Schmierstoffe in der Form von Fett oder dergleichen eingelagert werden kann.

Aufgrund der Federwirkung des Drahtkissenkörpers wird dieser zwar bei Fliehkraftbelastung der Schraubendruckfeder in radialer Richtung bezogen auf die Längsachse des Zweimassenschwungrads komprimiert, die Hohlräume bleiben aber bei einer entsprechend ausgewählten Federsteifigkeit des Drahtkissenkörpers in radialer Richtung erhalten und somit auch der vorhandene Schmierstoff zwischen dem Drahtkissenkörper und der Wandung des Zweimassenschwungrads. Aufgrund des flächigen Anliegens des Drahtkissenkörpers an der Wandung ist nämlich die Flächenpressung zwischen dem Drahtkissenkörper und der Wandung beträchtlich kleiner als die Flächenpressung zwischen den Windungen der Schraubendruckfeder und der Wandung, wenn die Schraubendruckfeder an der Wandung direkt anliegt.

Auch kann bei der Ausbildung des Drahtkissenkörpers dafür Sorge getragen werden, dass Festschmierstoffe in die Matrix des Drahtkissenkörpers eingelagert werden, die auch bei einer hohen Drehwinkelgeschwindigkeit des Zweimassenschwungrads im Kontaktbereich zwischen dem Drahtkissenkörper und der Wandung vorhanden bleiben und somit ihre die Reibung vermindernde Wirkung auch bei langer Betriebszeit des erfindungsgemäßen Zweimassenschwungrads beibehalten.

Bei dem Drahtkissenkörper kann es sich beispielsweise um einen aus Drahtgestricken gebildeten Körper handeln, der mittels eines Pressvorgangs in einer Form komprimiert wird. Auch kann es sich dabei um einen Drahtkissenkörper handeln, der aus einem Wickelkörper gebildet wird, der auf einer Welle oder einer Spule in Lagen aufgewickelt wird. Bevor der Draht dabei dem Wickelvorgang unterzogen wird, wird er zumindest innerhalb von Teilsegmenten oder Abschnitten seiner Längserstreckung einer Vorverformung unterzogen, was dazu führt, dass sich die einzelnen Drahtabschnitte innerhalb der Lagen und auch zwischen den Lagen untereinander wesentlich besser und intensiver verhaken, als dies bei einem unverformten Draht der Fall ist, was zu einer gegenüber dem aus einem unverformten Draht gebildeten Drahtkissenkörper wesentlich höher belastbaren Drahtkissenkörper führt.

Nach einer Weiterbildung der Erfindung ist es dabei vorgesehen, dass der Drahtkissenkörper in Längsrichtung der Schraubendruckfeder und/oder in radialer Richtung elastisch ausgebildet ist. In Abhängigkeit davon, wie dicht der Drahtkissenkörper in radialer Richtung gepackt ist, kann eine sich in radialer Richtung vergrößernde Steifigkeit des Drahtkissenkörpers erreicht werden. Damit ist beispielsweise eine Konfiguration möglich derart, dass die Relativbewegung zwischen der Feder und dem Drahtkissenkörper größer ist als die Relativbewegung zwischen dem Drahtkissenkörper und der Wandung des Zweimassenschwungrads.

Der Drahtkissenkörper kann auch in Längsrichtung der Schraubendruckfeder elastisch ausgebildet sein, so dass bei einer Federbewegung der Schraubendruckfeder beispielsweise im radial innen liegenden Kontaktbereich zwischen der Schraubendruckfeder und dem Drahtkissenkörper die Federbewegung von Drahtkissenkörper mitgemacht, gleichsam also aufgenommen wird, im radial außen liegenden Bereich zwischen dem Drahtkissenkörper und der Wandung des Zweimassenschwungrads aber eine Relativbewegung nicht mehr oder nur von geringerem Betrag stattfindet.

Bei einer solchen Konfiguration wird also dafür Sorge getragen, dass sich die Schraubendruckfedern nahezu frei bewegen können und somit eine Verhärtung der Schraubendruckfedern vermieden wird und daher die gewünschte akustische Entkopplung erhalten bleibt.

Nach einer Ausführungsform gemäß der vorliegenden Erfindung ist es vorgesehen, dass der Drahtkissenkörper als lang gestreckte Einlage zwischen mindestens einem Teilbereich der Längserstreckung der Schraubendruckfeder und der Wandung angeordnet ist. Es bedeutet dies mit anderen Worten, dass es schon ausreichend sein kann, wenn der Drahtkissenkörper nur Teilbereiche der Längserstreckung der Schraubendruckfeder und der Wandung voneinander trennt. Aber auch eine Anordnung eines Drahtkissenkörpers als Einlage zwischen der Schraubendruckfeder und der Wandung entlang der gesamten Längserstreckung der bogenförmig ausgebildeten Schraubendruckfedern ist nach der vorliegenden Erfindung vorgesehen.

Nach einer anderen Ausführungsform gemäß der vorliegenden Erfindung ist es vorgesehen, dass der Drahtkissenkörper als Strumpf ausgebildet ist, der die Schraubendruckfeder zumindest entlang eines Teilbereichs ihrer Längserstreckung umhüllt. Damit steckt die Schraubendruckfeder gleichsam innerhalb des als Strumpf ausgebildeten Drahtkissenkörpers und zwar zumindest an Teilbereichen ihrer Längserstreckung. Aber auch eine vollständige Umhüllung der Schraubendruckfeder entlang ihrer gesamten Längserstreckung durch den Drahtkissenkörper in der Form eines Strumpfes ist nach der vorliegenden Erfindung vorgesehen.

Nach einer Weiterbildung der Erfindung ist es vorgesehen, dass der Drahtkissenkörper im Bereich eines einer Anlagefläche zugewandten Endes einen mit dem Drahtkissenkörper einstückig ausgebildeten oder daran angeordneten Drahtkissenwiderlagerkörper aufweist, der zwischen einem Federende der Schraubendruckfeder und der Anlagefläche vorgesehen ist und über den Drahtkissenwiderlagerkörper eine Einleitung von Federkraft in die Anlagefläche stattfindet.

Der Drahtkissenwiderlagerkörper kann also beispielsweise am Ende des Drahtkissenkörpers eingelegt werden oder auch bei der Fertigung des Drahtkissenkörpers zusammen mit diesem ausgebildet werden. Der Drahtkissenwiderlagerkörper führt dann zu einer Verringerung des Verschleißes der Anlagefläche am Zweimassenschwungrad und damit zu einer Verlängerung der Standzeit des Zweimassenschwungrads.

Auch ist es dadurch möglich, die Anlagefläche zu verkleinern, da der Drahtkissenkörper im Gegensatz zum Federende der Schraubendruckfeder an der Anlagefläche flächig auffliegt und somit die Flächenpressung an der Anlagefläche verringert wird. Dies kann auch zu einer Verkleinerung der Anlagefläche genutzt werden, wodurch eine Verkleinerung der Dimensionierung der Bauteile ermöglicht wird und damit ein Gewichtsvorteil erzielt wird.

Der Drahtkissenwiderlagerkörper kann auch im Abstand zum Federende oder zur Anlagefläche vorgesehen sein, so dass zunächst eine relativ freie Beweglichkeit der Schraubendruckfedern erreicht wird und erst nach einem vorbestimmten Federweg ein Kontakt zwischen dem Federende der Schraubendruckfeder und den Drahtkissenwiderlagerkörper erreicht wird. Generell kann mit dem Drahtkissenwiderlagerkörper zwischen dem Federende und der Anlagefläche eine verbesserte Schwingungsisolation erreicht werden und damit eine Verbesserung des akustischen Verhaltens des erfindungsgemäßen Zweimassenschwungrads gegenüber dem bekannten Zweimassenschwungrad.

Nach einer Weiterbildung der Erfindung ist es vorgesehen dass der Drahtkissenkörper aus mindestens zwei Drahtkissensegmentkörpern gebildet ist, die funktional in Reihe oder parallel angeordnet sind.

Durch die Reihenschaltung wird eine weiche Konfiguration des Drahtkissenkörpers erreicht, während durch die Parallelschaltung ein Drahtkissenkörper gebildet werden kann mit einer Federkennlinie mit großer Steigung und damit ein harter Drahtkissenkörper, je nach dem, welche Konfiguration für den jeweiligen Anwendungsfall gewünscht ist.

Nach einer Weiterbildung der Erfindung ist es auch vorgesehen, dass der Drahtkissenkörper entlang seiner Wirkrichtung mit einer linearen oder progressiv oder degressiv veränderlichen Federrate ausgebildet ist. Eine solche Konfiguration mit veränderlicher Federrate kann beispielsweise bei der Herstellung des Drahtkissenkörpers erreicht werden, indem der Drahtkissenkörper mit einer vorbestimmten Zahl von Hohlräumen ausgebildet wird, die der Zahl der Hohlräume entsprechend zu einer weicheren oder weniger weichen Konfiguration führen. Eine progressive Federrate kann beispielsweise dann von Vorteil sein, wenn in Abhängigkeit vom Federweg des Drahtkissenkörpers zunächst ein nachgiebiges Verhalten gewünscht ist, um dann nach einem vorbestimmten Federweg ein Ansteigen der Federkennlinie und damit ein härteres Verhalten des Drahtkissenkörpers zu erreichen.

Der Drahtkissenkörper kann aus metallischen, keramischen, oder glasartigen Werkstoffen, aus Polymeren oder Gemischen daraus gebildet werden. Auch kann der Drahtkissenkörper aus metallischen Werkstoffen mit unterschiedlicher Härte gebildet werden. Damit wird eine Konfiguration ermöglicht, dass der Drahtkissenkörper einen ersten Kontaktbereich aufweist aus einem weichen metallischen Werkstoff, dem dann ein zweiter Kontaktbereich aus einem härteren metallischen Werkstoff folgt, wodurch beispielsweise eine von einer linearen Federrate abweichende Konfiguration möglich ist.

Der nach der Erfindung im Zweimassenschwungrad vorgesehene Drahtkissenkörper kann Hohlräume aufweisen, in denen ein Schmierstoff eingebettet ist, auch kann er eingelagerte Festschmierstoffteile aufweisen, die jeweils dafür sorgen, dass die Reibung zwischen dem Drahtkissenkörper und der Wandung des Zweimassenschwungrads niedrig bleibt und somit einer Verhärtung der Schraubendruckfedern vorgebeugt wird.

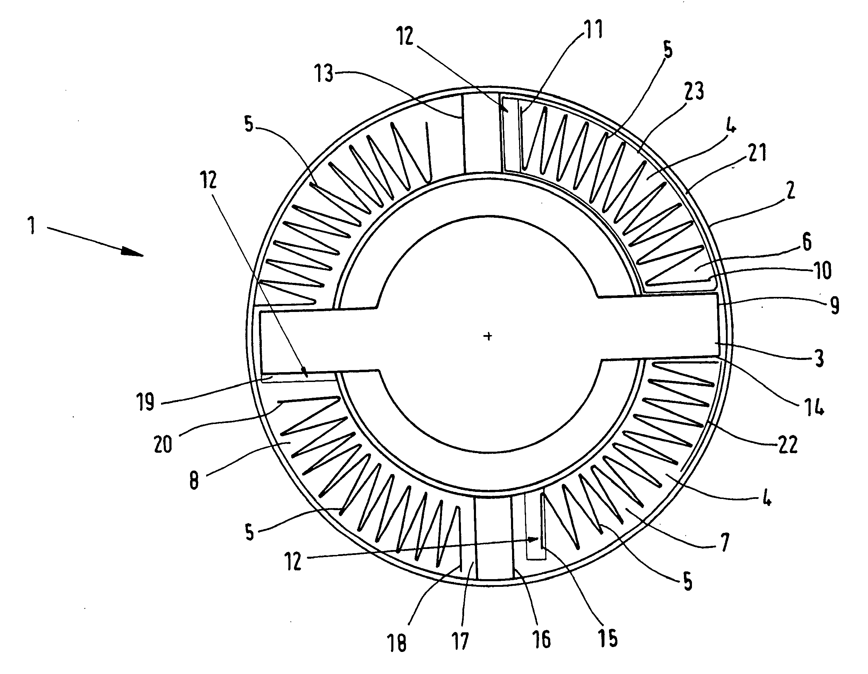

Die Erfindung wird im Folgenden anhand der Zeichnung näher erläutert. Diese zeigt in der einzigen Figur eine Draufsichtansicht auf ein schematisch dargestelltes Zweimassenschwungrad nach der vorliegenden Erfindung.

Das erfindungsgemäße Zweimassenschwungrad 1 weist einen ersten Massenkörper 2 sowie einen relativ dazu drehbaren zweiten Massenkörper 3 auf. Zwischen dem ersten Massenkörper 2 und dem zweiten Massenkörper 3 ist ein Aufnahmeraum 4 zur Aufnahme von bogenförmig ausgebildeten Schraubendruckfedern 5 vorgesehen.

Die im ersten Aufnahmeraum 6 angeordnete Schraubendruckfeder 5 stützt sich an einer am zweiten Massenkörper 3 ausgebildeten Anlagefläche 9 direkt ab, das heißt also ohne die Zwischenschaltung eines Drahtkissenwiderlagerkörpers. Diese Darstellung wurde dabei deshalb gewählt, um zu zeigen, dass nicht notwendigerweise an allen Anlageflächen des Zweimassenschwungrads Drahtkissenwiderlagerkörper vorgesehen sind.

Obwohl das Federende 10 der Schraubendruckfeder 5 im ersten Aufnahmeraum 6 im Abstand zur Anlagefläche 9 des zweiten Massenkörpers 3 dargestellt ist, kann hier auch ein direkter Kontakt vorliegen.

Die im ersten Aufnahmeraum 6 vorgesehene Schraubendruckfeder 5 stützt sich mit dem gegenüberliegenden Federende 11 an einen Drahtkissenwiderlagerkörper 12 ab, der sich mit seiner dem Federende 11 gegenüberliegenden Seite an einer Anlagefläche 13 des ersten Massenkörpers 2 abstützt.

Durch die Zwischenschaltung des Drahtkissenwiderlagerkörpers 12 zwischen das Federende 11 und die Anlagefläche 13 wird es im Überlastungsfall vermieden, dass sich das Federende 11 in die Anlagefläche 13 einarbeiten kann und diese beschädigt.

Die im zweiten Aufnahmeraum 7 angeordnete Schraubendruckfeder 5 stützt sich wiederum direkt an einer Anlagefläche 14 des zweiten Massenkörpers 3 ab. An dem gegenüberliegenden Federende 15 der Schraubendruckfeder 5 im zweiten Aufnahmeraum 7 ist ein Drahtkissenwiderlagerkörper 12 direkt am Federende 15 festgelegt und zwar im Abstand zu einer Anlagefläche 16 des ersten Massenkörpers 2. Hierdurch wird eine dem Abstand zwischen der der Anlagefläche 16 zugeordneten Anlagefläche des Drahtkissenwiderlagerkörpers 12 und der Anlagefläche 16 entsprechende Drehwinkeldrehbarkeit erreicht, bevor der Drahtkissenwiderlagerkörper 12 mit der Anlagefläche 16 in Kontakt kommt.

Im dritten Aufnahmeraum 8 ist ebenfalls eine Schraubendruckfeder 5 vorgesehen. Diese kann wiederum direkt mit einer Anlagefläche 17 des ersten Massenkörpers 2 in Kontakt treten, wobei dies lediglich bei der gewählten Darstellung der Fall ist, in entsprechender Weise kann auch an dem der Anlagefläche 17 gegenüberliegenden Federende 18 der Schraubendruckfeder 5 im dritten Aufnahmeraum 8 ein Drahtkissenwiderlagerkörper vorgesehen sein.

An der, dem Federende 18 gegenüberliegenden Anlagefläche 19 des zweiten Massenkörpers 3 ist wiederum ein Drahtkissenwiderlagerkörper 12 vorgesehen und zwar direkt an der Anlagefläche 19 angebunden. Der Drahtkissenwiderlagerkörper 12 steht dabei im Abstand zum Federende 20, so dass eine entsprechende Drehwinkeländerung zwischen dem ersten Massenkörper 2 und dem zweiten Massenkörper 3 möglich ist, bevor sich diese aneinander abstützen.

Wird nun das dargestellte Zweimassenschwungrad 1 einer hohen Drehwinkelgeschwindigkeit unterworfen, so werden die Schraubendruckfedern 5 mit hoher Kraft gegen die Wandung 21 des Aufnahmeraums 4 gedrückt. Um nun zu verhindern, dass die Schraubendruckfedern 5 mit einer solchen Kraft gegen die Wandung 21 gedrückt werden, dass eine Federbewegung der Schraubendruckfedern 5 nicht mehr möglich ist, sind zwischen den Schraubendruckfedern 5 und der Wandung 21 des Zweimassenschwungrads 1 Drahtkissenkörper 22 vorgesehen, die einen direkten Kontakt zwischen den Schraubendruckfedern 5 und der Wandung 21 vermeiden.

Die Zeichnung zeigt dabei einen im zweiten Aufnahmeraum 7 sich entlang eines Teils der Längserstreckung der dort vorgesehenen Schraubendruckfeder 5 erstreckenden Drahtkissenkörper 22. Dieser ist als langgestreckte Einlage zwischen der Wandung 21 und der Schraubendruckfeder 5 vorgesehen. Führt nun die Schraubendruckfeder 51 Federbewegung aus, so federt der Drahtkissenkörper 22 im Bogenrichtung der Schraubendruckfeder 5 mit. Die Schraubendruckfeder 5 kann sich daher weit gehend frei federnd bewegen.

Im ersten Aufnahmeraum 6 ist eine Schraubendruckfeder 5 zusammen mit einem Drahtkissenwiderlagerkörper 12 in einem Drahtkissenkörper 23 eingeordnet, der als Strumpf die Schraubendruckfeder 5 und den Drahtkissenwiderlagerkörper 12 vollständig umhüllt.

Eine solche Konfiguration eines als Strumpf ausgebildeten Drahtkissenkörpers kann beispielsweise auch im dritten Aufnahmeraum 8 oder in allen Aufnahmeräumen des Zweimassenschwungrads 1 vorgesehen sein. Der Drahtkissenkörper 23 ist dabei so ausgebildet, dass er sowohl in radialer Richtung, also in Richtung zur Wandung 21 hin, als auch in Richtung der Längserstreckung der Schraubendruckfeder 5 eine federnde Wirkung ausübt.

Liegt der Drahtkissenkörper 23 als Strumpf vor, so besitzt er im Anlagebereich zur Schraubendruckfeder eine torusförmige Kontur, die den Vorteil besitzt, dass sich der Drahtkissenkörper an der Schraubendruckfeder selbstständig zentriert und damit in die Befestigung an dem Gehäusewandungen des erfindungsgemäßen Zweimassenschwungrads entfallen kann.

Das erfindungsgemäße Zweimassenschwungrad zeichnet sich nun dadurch aus, dass es ausgezeichnete tribologische Eigenschaften während seiner gesamten Lebenszeit besitzt und eine deutlich höhere Verschleißfestigkeit aufweist als das bekannte vorstehend beschriebene Zweimassenschwungrad und zudem einen Vorteil einer deutlichen Kostensenkung aufweist, da die aus einem Kunststoffwerkstoff gefertigten Gleitbauteile des bekannten Zweimassenschwungrads entfallen können.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Zweimassenschwungrad
- 2: erster Massenkörper
- 3: zweiter Massenkörper
- 4: Aufnahmeraum
- 5: Schraubendruckfeder
- 6: erster Aufnahmeraum
- 7: zweiter Aufnahmeraum
- 8: dritter Aufnahmeraum
- 9: Anlagefläche
- 10: Federende
- 11: Federende
- 12: Drahtkissenwiderlagerkörper
- 13: Anlagefläche
- 14: Anlagefläche
- 15: Federende
- 16: Anlagefläche
- 17: Anlagefläche
- 18: Federende
- 19: Anlagefläche
- 20: Federende
- 21: Wandung
- 22: Drahtkissenkörper
- 23: Drahtkissenkörper

## Patentansprüche

1. Zweimassenschwungrad mit einem ersten Massenkörper (2) sowie einem zweiten Massenkörper (3). die über eine zwischen dem ersten (2) und zweiten (3) Massenkörper angeordnete Dämpfungseinrichtung gegeneinander verdrehbar sind, und die Dämpfungseinrichtung mindestens eine bogenförmig verlaufende Schraubendruckfeder (5) aufweist, die über am ersten (2) und zweiten (3) Massenkörper ausgebildete Anlageflächen (9) Federkraft in die Massenkörper (2, 3) einleitet und die Schraubendruckfeder (5) mittels einer von einem Massenkörper (2, 3) gebildeten Wandung (21) radial geführt ist und zwischen der Wandung (21) und der Schraubendruckfeder (5) mindestens ein die Reibung verminderndes Gleitbauteil vorgesehen ist, **dadurch gekennzeichnet, dass** als Gleitbauteil ein Drahtkissenkörper (22, 23) vorgesehen ist.

2. Zweimassenschwungrad nach Anspruch 1, **dadurch gekennzeichnet, dass** der Drahtkissenkörper (22, 23) in Längsrichtung der Schraubendruckfeder (5) und/oder in radialer Richtung elastisch ausgebildet ist.

3. Zweimassenschwungrad nach Anspruch 1 oder 2, **dadurch gekennzeichnet, dass** der Drahtkissenkörper (22) als lang gestreckte Einlage zwischen mindestens einem Teilbereich der Längserstreckung der Schraubendruckfeder (5) und der Wandung (21) angeordnet ist.

4. Zweimassenschwungrad nach Anspruch 1 oder 2, **dadurch gekennzeichnet, dass** der Drahtkissenkörper (23) als Strumpf ausgebildet ist, der die Schraubendruckfeder (5) zumindest entlang eines Teilbereichs ihrer Längserstreckung umhüllt.

5. Zweimassenschwungrad nach einem der vorstehenden Ansprüche, **dadurch gekennzeichnet, dass** der Drahtkissenkörper (22, 23) im Bereich eines einer Anlagefläche (9) zugewandten Endes einen mit dem Drahtkissenkörper (22, 23) einstückig ausgebildeten oder daran angeordneten Drahtkissenwiderlagerkörper (12) aufweist, der zwischen einem Federende (15) der Schraubendruckfeder (5) und der Anlagefläche (9) vorgesehen ist, und über den Drahtkissenwiderlagerkörper (12) eine Einleitung von Federkraft in die Anlagefläche (9) stattfindet.

6. Zweimassenschwungrad nach Anspruch 5, **dadurch gekennzeichnet, dass** der Drahtkissenwiderlagerkörper (12) im Abstand zum Federende oder zur Anlagefläche vorgesehen ist.

7. Zweimassenschwungrad nach einem der vorstehenden Ansprüche, **dadurch gekennzeichnet, dass** der Drahtkissenkörper (22, 23) aus mindestens zwei Drahtkissensegmentkörpern gebildet ist, die funktional in Reihe oder parallel angeordnet sind.

8. Zweimassenschwungrad nach einem der vorstehenden Ansprüche, **dadurch gekennzeichnet, dass** der Drahtkissenkörper (22, 23) entlang seiner Wirkrichtung mit einer linearen oder progressiv oder degressiv veränderlichen Federrate ausgebildet ist.

9. Zweimassenschwungrad nach einem der vorstehenden Ansprüche, **dadurch gekennzeichnet, dass** der Drahtkissenkörper (22, 23) entlang seiner Wirkrichtung mit Bereichen unterschiedlicher Dichte ausgebildet ist.

10. Zweimassenschwungrad nach einem der vorstehenden Ansprüche, **dadurch gekennzeichnet, dass** der Drahtkissenkörper (22, 23) aus metallischen, keramischen, glasartigen Werkstoffen, Polymeren oder Gemischen daraus gebildet ist.

11. Zweimassenschwungrad nach einem der vorstehenden Ansprüche, **dadurch gekennzeichnet, dass** der Drahtkissenkörper (22, 23) aus metallischen Werkstoffen mit unterschiedlicher Härte gebildet ist.

12. Zweimassenschwungrad nach einem der vorstehenden Ansprüche, **dadurch gekennzeichnet, dass** der Drahtkissenkörper (22, 23) Hohlräume aufweist, in denen ein Schmierstoff eingebettet ist.

13. Zweimassenschwungrad nach einem der vorstehenden Ansprüche, **dadurch gekennzeichnet, dass** der Drahtkissenkörper (22, 23) eingelagerte Festschmierstoffteile besitzt.

## Claims

1. A two-weight flywheel comprising a first weight (2) and a second weight (3) rotatable relative to one another by a damping device disposed between the first weight (2) and the second weight (3), and the damping device comprises at least one arcuate helical compression spring (5) which exerts spring force on the weights (2, 3) via contact surfaces on the first weight (2) and the second weight (3) and the helical compression spring (5) is radially guided by a wall (21) formed by a weight (2, 3) and at least one friction-reducing sliding component is provided between the wall (21) and the helical compression spring (5), **characterised in that** the sliding component is a wire cushion member (22, 23).

2. A flywheel according to claim 1, **characterised in that** the wire cushion member (22, 23) is elastic in the longitudinal direction of the helical compression spring (5) and/or in the radial direction.

3. A flywheel according to claim 1 or claim 2, **characterised in that** the wire cushion member (22, 23) is an elongate insert disposed between the wall (21) and at least a part of the longitudinal extension of the helical compression spring (5).

4. A flywheel according to claim 1 or claim 2, **characterised in that** the wire cushion member (23) is in the form of a stocking which surrounds the helical compression spring (5) along at least a part of its longitudinal extent.

5. A flywheel according to any of the preceding claims, **characterised in that** the wire cushion member (22, 23), at an end facing a contact surface (9), comprises a wire cushion abutment member (12) disposed integrally with or on the wire cushion member (22, 23) and provided between the contact surface (9) and an end (15) of the helical compression spring (5), and spring force is exerted on the contact surface (9) via the wire cushion abutment member (12).

6. A flywheel according to claim 5, **characterised in that** the wire cushion abutment member (12) is disposed at a distance from the spring end or from the contact surface.

7. A flywheel according to any of the preceding claims, **characterised in that** the wire cushion member (22, 23) is made up of at least two segments disposed in series or in parallel during operation.

8. A flywheel according to any of the preceding claims, **characterised in that** the wire cushion member (22, 23) has a spring rate which varies in linear, increasing or decreasing manner in its operative direction.

9. A flywheel according to any of the preceding claims, **characterised in that** the wire cushion member (22, 23) is formed with regions differing in thickness in its operative direction.

10. A flywheel according to any of the preceding claims, **characterised in that** the wire cushion member (22,23) is made of metal or ceramic or glass-like substances or polymers or mixtures thereof.

11. A flywheel according to any of the preceding claims, **characterised in that** the wire cushion member (22, 23) is made of metal materials varying in hardness.

12. A flywheel according to any of the preceding claims, **characterised in that** the wire cushion member (22, 23) has cavities in which a lubricant is embedded.

13. A flywheel according to any of the preceding claims, **characterised in that** the wire cushion member (22, 23) has incorporated solid lubricant parts.

## Revendications

1. Volant d'inertie à deux masses ayant un premier corps de masse (2) ainsi qu'un second corps de masse (3) mobile en rotation l'un par rapport à l'autre par l'intermédiaire d'un dispositif d'amortissement monté entre ce premier corps de masse (2) et ce second corps de masse (3), le dispositif d'amortissement comportant au moins un ressort de pression hélicoïdal (5) s'étendant en forme d'arc, qui transmet des forces élastiques aux corps de masse (2, 3) par l'intermédiaire de surfaces d'appui (9) formées sur le premier corps de masse (2) et sur le second corps de masse (3), et le ressort de pression hélicoïdal (5) étant guidé radialement par une paroi (21) formée par un corps de masse (23) et, entre la paroi (21) et le ressort de pression hélicoïdal (5) étant prévu au moins un élément de glissement diminuant la friction,
**caractérisé en ce qu'**
entant qu'élément de glissement il est prévu un corps de coussinet de fil (22, 23).

2. Volant d'inertie à deux masses conforme à la revendication 1,
**caractérisé en ce que**
le corps de coussinet de fil (22, 23) est réalisé élastiquement dans la direction longitudinale du ressort de pression hélicoïdal (5) et/ou en direction radiale.

3. Volant d'inertie à deux masses conforme à la revendication 1 ou 2,
**caractérisé en ce que**
le corps de coussinet de fil (22) est monté sous la forme d'une garniture s'étendant longitudinalement entre au moins une zone partielle de l'extension longitudinale du ressort de pression hélicoïdal (5) et la paroi (21).

4. Volant d'inertie à deux masses conforme à la revendication 1 ou 2,
**caractérisé en ce que**
le corps de coussinet de fil (23) est réalisé sous la forme d'un manchon qui entoure le ressort de pression hélicoïdal (5) au moins le long d'une partie de son extension longitudinale.

5. Volant d'inertie à deux masses conforme à l'une des revendications précédentes,
**caractérisé en ce que**
le corps de coussinet de fil (22, 23) comporte, dans la zone d'une extrémité tournée vers une surface d'appui (9) un corps de butée de coussinet de fil (12) réalisé en une seule pièce avec le corps de coussinet de fil (22, 23) ou monté sur celui-ci, et qui est prévu entre une extrémité élastique (15) du ressort de pression hélicoïdal (5) et la surface d'appui (9) et, le transfert de la force élastique sur la surface d'appui (9) se produisant par l'intermédiaire du corps de butée du coussinet de fil (12).

6. Volant d'inertie à deux masses conforme à la revendication 5,
**caractérisé en ce que**
le corps de butée du coussinet de fil (12) est situé à distance de l'extrémité élastique ou de la surface d'appui.

7. Volant d'inertie à deux masses conforme à l'une des revendications précédentes,
**caractérisé en ce que**
le corps de coussinet de fil (22, 23) est formé d'au moins deux corps de segment de coussinet de fil qui sont montés fonctionnellement en série ou en parallèle.

8. Volant d'inertie à deux masses conforme à l'une des revendications précédentes,
**caractérisé en ce que**
le corps de coussinet de fil (22, 23) présente, le long de sa direction d'action a un taux d'élasticité variant linéairement ou progressivement ou de façon dégressive.

9. Volant d'inertie à deux masses conforme à l'une des revendications précédentes,
**caractérisé en ce que**
le corps de coussinet de fil (22, 23) présente le long de sa direction d'action des zones de densités différentes.

10. Volant d'inertie à deux masses conforme à l'une des revendications précédentes,
**caractérisé en ce que**
le corps de coussinet de fil (22, 23) est réalisé en des matériaux métalliques, céramiques vitreux, polymères ou des mélanges de tels matériaux.

11. Volant d'inertie à deux masses conforme à l'une des revendications précédentes,
**caractérisé en ce que**
le corps de coussinet de fil (22, 23) est réalisé en des matériaux métalliques ayant différentes duretés.

12. Volant d'inertie à deux masses conforme à l'une des revendications précédentes,
**caractérisé en ce que**
le corps de coussinet de fil (22, 23) comporte des cavités dans lequel est incorporé un lubrifiant.

13. Volant d'inertie à deux masses conforme à l'une des revendications précédentes,
**caractérisé en ce que**
le corps de coussinet de fil (22, 23) comporte des parties en matériau lubrifiant solide intégrées dans celui-ci.
